Europäisches Patentamt

European Patent Office

Office européen des brevets

(19)

(11) Veröffentlichungsnummer : **0 167 014**
**B1**

(12) **EUROPÄISCHE PATENTSCHRIFT**

(45) Veröffentlichungstag der Patentschrift :
24.01.90

(21) Anmeldenummer : 85107048.2

(22) Anmeldetag : 07.06.85

(51) Int. Cl.⁵ : **C 09 C   1/56, B 01 J   8/24,**
**G 05 D   9/12, G 01 F 23/28**

(54) Verfahren zur Behandlung von fluidisiertem Russ mit Gasen und Fliessbettapparatur zur Durchführung des Verfahrens.

(30) Priorität : 27.06.84 DE 3423580

(43) Veröffentlichungstag der Anmeldung :
08.01.86 Patentblatt 86/02

(45) Bekanntmachung des Hinweises auf die Patenterteilung : 24.01.90 Patentblatt 90/04

(84) Benannte Vertragsstaaten :
FR GB IT NL

(56) Entgegenhaltungen :
EP-A- 0 093 801
DE-A- 1 548 983
FR-A- 2 148 650
FR-A- 2 505 858
GB-A-   895 990
US-A- 2 864 674
US-A- 2 953 437

(73) Patentinhaber : **Degussa Aktiengesellschaft**
**Weissfrauenstrasse 9**
**D-6000 Frankfurt am Main 1 (DE)**

(72) Erfinder : **Voll, Manfred, Dr.**
**Lindenstrasse 3**
**D-6455 Erlensee (DE)**
Erfinder : **Engel, Richard, Dr.**
**Veilchenweg 27**
**D-5303 Waldorf (DE)**

EP 0 167 014 B1

**Beschreibung**

Die Erfindung betrifft ein Verfahren zur Behandlung von fluidisierten Rußen in einem Fließbett mit Gasen bei vorzugsweise erhöhter Temperatur, eine Apparatur zur Durchführung dieses Verfahrens und einen in der Apparatur verwendbaren Grenzwertgeber zur Anzeige eines vorgegebenen Niveaus eines Fließbettes.

Ruße werden häufig zu verschiedenen Zwecken nachbehandelt, sei es um bestimmte Eigenschaftsänderungen herbeizuführen, Verunreinigungen auszutreiben oder den Ruß gezielt abzubauen. So können Ruße, um z. B. ihre Benetzung durch Bindemittel zu erleichtern, einer oxidativen Nachbehandlung mit flüssigen oder gasförmigen Reagenzien unterworfen werden, wobei die an sich unpolare Rußoberfläche in eine teilweise polare Oberfläche umgewandelt wird.

Ruße können des weiteren, abhängig von ihrer Herstellungsart und Teilchengröße, an ihrer Oberfläche polycyklische Kohlenwasserstoffe absorbiert enthalten, die sich mit Lösungsmitteln extrahieren und mengenmäßig bestimmen lassen. Ein zu hoher Gehalt an diesen extrahierbaren Stoffen kann bei manchen Anwendungen erheblich stören, so daß sich die Notwendigkeit ergibt, vorher eine Absenkung des Gehalts an extrahierbaren Bestandteilen vorzunehmen. Dies kann z. B. gemäß der DE-OS 31 18 907 durch eine Behandlung mit heißer Luft und/oder Wasserdampf erfolgen.

Ist eine Erhöhung der inneren Oberfläche von Rußen erwünscht, so kann man sie bei hoher Temperatur mit reaktionsfähigen Gasen, wie Sauerstoff, Wasserdampf oder Kohlendioxid umsetzen, wodurch ein gezielter Abbau mit Erhöhung der elektrischen Leitfähigkeit erzielt wird.

Für eine Nachbehandlung mit gasförmigen Behandlungsmitteln hat sich im allgemeinen das sogenannte Fließbett-Verfahren als besonders vorteilhaft erwiesen, weil dabei der pulverförmige Zustand des Ausgangsmaterials erhalten bleibt und das Fließbett-Verfahren einen optimalen Stoffaustausch sichert.

So ist z. B. in der GB-PS 895 990 ein Verfahren zur Oxidation von Ruß beschrieben, bei dem das Ausgangsmaterial mit einem Gemisch von Stickoxiden und Luft im Gleichstrom innerhalb einer Reaktionsstrecke umgesetzt wird. Ein Nachteil dieser Verfahrensweise besteht jedoch darin, daß der Ruß der Gefahr einer Überhitzung ausgesetzt ist, die zu Entzündung und Glimmbrand führen kann. Dies ist darauf zurückzuführen, daß frischer, reaktionsfähiger Ruß unmittelbar mit dem frischen Oxidationsmittel in Berührung kommt. Ein anderer Nachteil besteht darin, daß der am Ende der Reaktionsstrecke weitgehend ausreagierte Ruß nur noch mit einer Atmosphäre in Berührung kommt, in der das Oxidationsmittel bereits abgereichert ist. Über die Reaktionsstrecke verläuft daher ein Gradient der Aktivität, welcher am Anfang zu hoch, am Ende zu niedrig liegt.

An sich erscheint ein Arbeiten im Gegenstrom günstiger, da hier der frische Ruß nur noch mit abgemagertem Gas, der reaktionsträge schon umgesetzte Ruß jedoch mit frischem, reaktionsfähigen Gasgemisch in Berührung kommt. Die Reaktion sollte demgemäß hier gleichmäßiger über die gesamte Reaktionsstrecke verlaufen.

Trotz dieser erkennbaren Vorteile ist eine Gegenstrombehandlung von Rußen im Fließbett in der Praxis bisher nicht verwirklicht worden, weil keine Niveauregelung zur Verfügung stand, die sich für das auf hohen Temperaturen befindliche Ruß-Fließbett geeignet hätte. Damit fehlte eine unabdingbare Voraussetzung, um ein solches Fließbett überhaupt im Gegenstrom betreiben zu können. Gegenstrom setzt nämlich voraus, daß der Ruß oben ein- und unten ausgetragen wird, weil das Behandlungsgas immer von unten nach oben strömen muß, um das Fließbett aufrechtzuerhalten. Wenn also dieses weder überlaufen noch leerlaufen soll, der Reaktionsraum also immer gleichmäßig gefüllt sein soll, ist eine geeignete Messung und Regelung des Füllstandes des Fließbets unumgänglich. Diese Maßnahmen sind bei fluidisierten Rußen besonders schwierig zu bewerkstelligen, weil erstens die Fließbettdichte hier mit 10-20 g/l sehr niedrig liegt und weil zweitens zumindest für die bei den meisten Rußnachbehandlungsmethoden erforderlichen hohen Temperaturen keine geeigneten Meßfühler zur Verfügung standen.

Die aufgezeigte Problematik besteht nicht nur hinsichtlich oxidativer Nachbehandlungsverfahren für Ruße, sondern allgemein für an den Rußen vorzunehmende chemische Reaktionen.

Im Prinzip gelten die beim Oxidationsverfahren angestellten Überlegungen auch für Desorptionsverfahren bzw. Abbau-Verfahren. Dabei käme im Gleichstrom der behandelte Ruß mit einem Behandlungsgas zusammen, welches mit den höchsten Anteilen an desorbierten Stoffen beladen ist, wodurch die Gefahr einer Reabsorption besteht. Der frische Ruß jedoch, welcher desorbierbare Bestandteile besonders leicht abspaltet, käme hier unnötigerweise mit frischem Behandlungsgas zusammen.

Bei Anwendung des Gegenstromprinzips könnte dagegen unter Anwendung gleicher Gasmengen eine wesentlich höhere Wirksamkeit oder aber gleiche Wirksamkeit bei kürzeren Verweilzeiten erzielt werden. Auch hier ist aber eine geeignete Niveauregelung wiederum Voraussetzung.

Als Signalgeber für den Füllstand von Fließbetten waren Geräte auf dem Markt, welche z. B. die Dämpfung einer elektrisch zu Schwingungen angeregten Metallgabel oder die Änderung der dielektrischen Eigenschaften beim Eintauchen des betreffenden Fühlers in das Fließbett erfaßten. Der erstgenannte Gerätetyp erwies sich bei den geringen Dichten eines Rußfließbettes schon bei niedrigen Temperaturen häufig als unzuverlässig; bei hohen Temperaturen ist er aus Materialgründen überhaupt nicht einsetzbar.

Das auf dem dielektrischen Meßweg gründende Gerät erwies sich wegen der elektrischen Leitfähigkeit des Rußes und der unvermeidbaren Ablagerungen auf den Isolatoren der Elektroden als unbrauchbar.

Der Erfindung liegt daher die Aufgabe zugrunde, ein geeignetes Verfahren zur Behandlung von fluidisiertem Ruß mit Gasen bei vorzugsweise erhöhter Temperatur in einem Fließbett zu schaffen, welches das Gegenstromprinzip ermöglicht und eine Apparatur zur Durchführung dieses Verfahrens mit einer zur Niveauregelung brauchbaren Signal/ Regel-Einrichtung zu entwickeln.

Das Verfahren ist gemäß der Erfindung dadurch gekennzeichnet, daß man den Ruß und die Behandlungsgase zur Einstellung eines gewünschten Wirkungsprofils im Sinne einer möglichst gleichmäßigen Reaktionsgeschwindigkeit und Temperaturverteilung in der Behandlungsstrecke im Gegenstrom führt, die Massenströme von Ruß und Behandlungsgasen konstant hält und den Massenstrom des Ausgangsrußes oder des behandelten Rußes mit Hilfe eines optisch-elektrischen Füllstandsignals so regelt, daß die Höhe des Fließbetts auf einem vorgegebenen Niveau gehalten wird.

Die im erfindungsgemäßen Verfahren vorgesehene optischelektrische Füllstandsanzeige nutzt die Lichtabsorption durch den fluidisierten Ruß zur Erzeugung eines elektrischen Signals aus.

Das neue Verfahren erlaubt zwei vorteilhafte Betriebsweisen. Die erste sieht vor, daß man den behandelten Ruß in zeitlich konstantem Massenstrom austrägt und den Ausgangsruß in einer solchen Menge einspeist, daß das Niveau des Fließbetts konstant gehalten wird.

Die zweite Betriebsweise besteht darin, daß man den Ausgangsruß in zeitlich konstantem Massenstrom einträgt und den behandelten Ruß in einer solchen Menge austrägt, daß das Niveau des Fließbetts konstant gehalten wird.

Von den beiden Betriebsweisen hat erstgenannte den Vorteil eines günstigeren Verhaltens im Störfall, in dem nämlich bei einem Versagen des Rußaustrags ein Überfüllen des Behandlungsgefäßes mit Sicherheit vermieden wird und damit ein potentielles Sicherheitsrisiko ausgeschaltet bleibt.

Ein weiterer Gegenstand der Erfindung besteht in einer Apparatur zur Durchführung des erfindungsgemäßen Verfahrens. Sie besteht aus einem senkrecht stehenden zylinderförmigen Behandlungsgefäß, einem an dessen unterem Ende angeordneten Fluidisierungsteil aus einem vom Zylinderquerschnitt aus nach unten verlaufenden kegelstumpfförmigen Mantel, einem in den Kegelstumpf eingesetzten, nach oben zulaufenden kegelförmigen Verdrängungskörper, mindestens einem an der tiefsten Stelle des Fluidisierungsteils im wesentlichen tangential mündenden Einleitungsrohr für das Behandlungsgas sowie einem über dem Behandlungsgefäß angeordneten Beruhigungsteil mit Auslaßrohr für das Abgas und ist gekennzeichnet durch ein axial in den Verdrängungskörper eingesetztes, in seinem verjüngten Ende mündendes, mit einer Schleuse verbundenes Rußaustragsrohr, eine am Kopf des Beruhigungsteils mündende und mit einer Schleuse verbundene Rußzufuhr sowie einen am Übergang zwischen Behandlungsgefäß und Beruhigungsteil angebrachten, das obere Niveau des Fließbetts über eine der beiden Schleusen steuernden optisch-elektrischen Grenzwertgeber.

Ein mit Vorteil in der erfindungsgemäßen Apparatur verwendbarer, sonst aber universell zur Anzeige eines vorgegebenen Niveaus eines vorzugsweise heißen Fließbettes aus lichtabsorbierenden Teilchen brauchbarer Grenzwertgeber ist ein weiterer Gegenstand der Erfindung. Er liefert eine technische Voraussetzung für die Verwirklichung von Gegenstromverfahren der besprochenen Art. Der neue Grenzwertgeber ist gekennzeichnet durch einen haarnadelförmigen von einer Meßstrecke unterbrochenen Lichtleiter, der an einem Schenkelende mit einer Lichtquelle und am anderen Schenkelende mit einem ein elektrisches Signal erzeugenden Lichtempfänger in Verbindung steht, wobei der Grenzwertgeber relativ zum Fließbett so anbringbar ist, daß sein die Meßstrecke aufweisender Teil in das Fließbett ragt, seine rückwärtigen Schenkelabschnitte aber aus dem Fließbett zu Lichtquelle bzw. -empfänger herausführen.

Um einen eventuellen Ansatz von Feststoff an den Lichtleiterenden der Meßstreckenzone periodisch entfernen zu können, ist der Grenzwertgeber nach einer vorteilhaften Ausgestaltung der Erfindung mit einer zur Meßstrecke führenden Leitung versehen, welche mit mindestens einer auf die Lichtleiterenden an der Meßstrecke gerichteten Austrittsöffnung für Spülgasimpulse versehen ist.

Ansatzhindernd erweist sich ferner eine möglichst glatte Ausbildung der Lichtleiterenden an der Meßstrecke. Diese kann durch Maßnahmen wie Feinschliff, Polieren oder Glattschmelzen hergestellt werden.

Eine besonders wirkungsvolle Variante des Grenzwertgebers gemäß der Erfindung sieht vor, daß der lichtzuführende Lichtleiterschenkel zur Lichtbündelung an der Meßstrecke verjüngt und/ oder seine Lichtaustrittsfläche konvex ausgebildet ist. Dadurch werden der austretende Lichtstrom stärker gebündelt und Lichtverluste reduziert.

Als Lichtleiter lassen sich Stäbe aus temperaturbeständigen und korrosionsunempfindlichen Gläsern, z. B. aus Quarzglas oder Chemie-Geräteglas einsetzen.

Als Lichtquelle sind Lampen brauchbar, auf deren Licht das jeweils verwendete lichtempfindliche Element, z. B. ein Fotowiderstand oder eine Fotozelle oder ein Fototransistor anspricht. Gegebenenfalls können vor dem lichtempfindlichen Element Filter angebracht werden, welche nur Licht bestimmter Wellenlänge durchlassen.

Die Schenkel des haarnadelförmigen Lichtleiters treten in ihrem rückwärtigen Abschnitt aus dem Fließbett aus und enden in je einer Kammer eines Meßkopfes, welcher außerhalb des Behand-

lungsgefäßes angeordnet ist und Lichtquelle und Lichtempfänger in jeweils einer der Kammern aufnimmt. Die beiden Kammern sind gegeneinander lichtdicht ausgeführt. In der Kammer für den Lichtempfänger können weitere, zur Signalverarbeitung dienende Bauteile untergebracht sein.

Die aus dem Meßkopf gasdicht herausgeführten Lichtleiterschenkel sowie gegebenenfalls die Spülgasleitung sind von einem Schutzrohr umgeben, welches seinerseits an der gewünschten Stelle gasdicht am Behandlungsgefäß befestigt wird und in dieses einmündet.

Eine bevorzugte Ausführungsform der erfindungsgemäßen Apparatur mit einem eingebauten Grenzwertgeber gemäß der Erfindung ist in der Zeichnung dargestellt. Es zeigt

Figur 1 eine schematische Darstellung der Fließbett-Apparatur und

Figur 2 eine detaillierte Darstellung einer vorteilhaften Ausführungsform des Grenzwertgebers mit schematisierter Zuordnung zu der Fließbett-Apparatur von Figur 1.

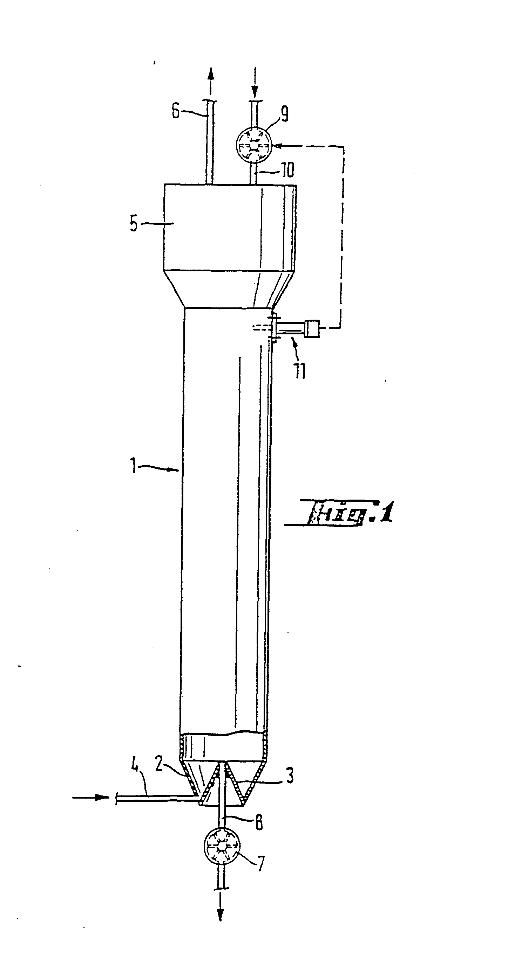

Die Fließbett-Apparatur gemäß Figur 1 besteht aus einem senkrecht stehenden zylinderförmigen Behandlungsgefäß 1. Dieses weist an seinem unteren Ende einen Fluidisierungsteil auf, der aus einem vom Zylinderquerschnitt aus nach unten verlaufenden kegelstumpfförmigen Mantel 2, einem in den Kegelstumpf eingesetzten, nach oben zulaufenden kegelförmigen Verdrängungskörper 3 und mindestens einem an der tiefsten Stelle des Fluidisierungsteils im wesentlichen tangential mündenden Einleitungsrohr 4 für das Behandlungsgas besteht. Über dem Behandlungsgefäß 1 ist ein Beruhigungsteil 5 mit einem Auslaßrohr 6 für das Abgas angeordnet. Der Beruhigungsteil 5 weist vorteilhaft einen etwas größeren Querschnitt als das Behandlungsgefäß 1 auf, um die Strömungsgeschwindigkeit des Trägergases unter die Sinkgeschwindigkeit der fluidisierten Rußteilchen abzusenken.

Um diese Apparatur im Gegenstrom betreiben zu können, ist sie mit folgenden Merkmalen versehen : In den Verdrängungskörper 3 ist axial ein mit einer Schleuse 7 verbundenes Rußaustragsrohr 8 eingesetzt. Es mündet im verjüngten Ende des Verdrängungskörpers 3. Am Kopf des Beruhigungsteils 5 mündet eine mit einer Dosierschleuse 9 verbundene Rußzufuhr 10. Die Schleuse 9 wird von einem darüber angeordneten Bunker aus mit Ruß beschickt. Im Falle der Beschickung aus einem tiefer liegenden Rußbunker wird der Ruß mittels der Schleuse 9 in eine pneumatische Fördereinrichtung eindosiert und in einer mit der Rußzufuhr 10 verbundenen Abscheidevorrichtung, z. B. einem Zyklon, aus dem Förderstrom abgetrennt und in den Kopfteil 5 der Apparatur eingespeist.

Um das Fließbett auf einem konstanten Niveau halten zu können, ist am Übergang zwischen Behandlungsgefäß 1 und Beruhigungsteil 5 ein optisch-elektrischer Fühler 11 angebracht, welcher die optische Dichte an der Meßstelle in elektrische Spannung umsetzt.

Dieser als Grenzwertgeber geschaltete Fühler 11 steuert die Dosierschleuse 9.

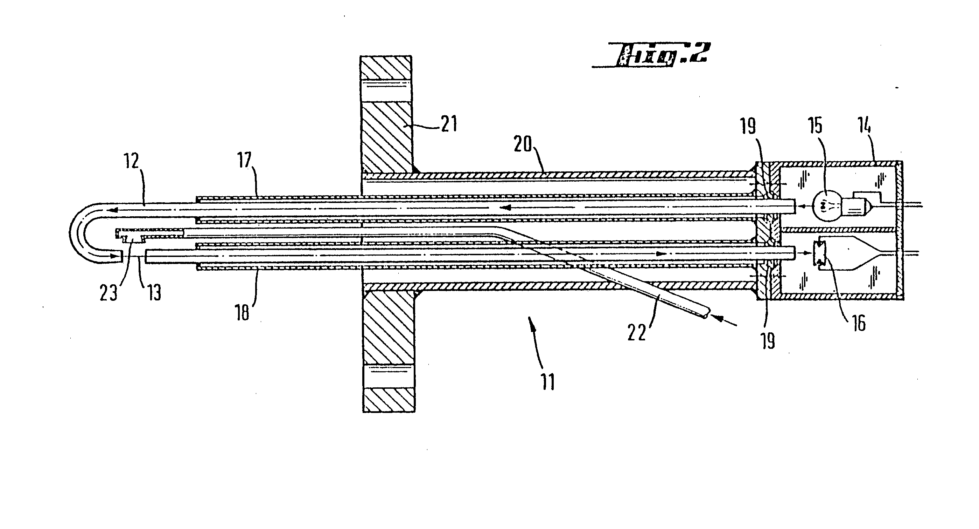

Prinzipiell sind für den erfindungsgemäß in der Apparatur zu verwendenden Grenzwertgeber verschiedene Ausführungen im Rahmen des beanspruchten Prinzips möglich. Eine besonders vorteilhafte und betriebssichere Ausführungsform des Grenzwertgebers besteht gemäß Fig. 2 aus einem haarnadelförmigen Lichtleiter 12, der an einem Schenkel eine als Meßstrecke dienende Unterbrechung 13 aufweist. Die beiden Schenkel des unterbrochenen Lichtleiters enden in einem aus zwei lichtdichten Kammern bestehenden Meßkopf 14. Eine der Kammern enthält eine Lichtquelle 15, von der das eine Schenkelende des Lichtleiters 12 mit Licht beaufschlagt wird. In der anderen Kammer befindet sich ein Lichtempfänger 16, der mit dem zweiten Schenkelende des Lichtleiters in Verbindung steht. Als Lichtempfänger können z. B. Fotowiderstände, Fototransistoren oder Fotozellen verwendet werden. Zweckmäßigerweise ist auch ein Meßverstärker zur Verstärkung des lichtabhängigen elektrischen Signals des Lichtempfängers in dem Meßkopf untergebracht.

Die beiden Schenkel des Lichtleiters 12 befinden sich in Führungsrohren 17 und 18. Durch Dichtungen 19 werden die Lichtleiterschenkel arretiert und die Führungsrohre gasdicht abgeschlossen. Der Lichtleiter 12 und die Führungsrohre 17 und 18 sind von einem gemeinsamen Schutzrohr 20 umgeben, das mit einem Flansch 21 oder einer ähnlichen Einrichtung versehen ist, mit deren Hilfe die Meßsonde in der Weise gasdicht an der Behälterwand befestigt wird, daß die Meßstrecke 13 im Innern des Behälters zu liegen kommt, der Meßkopf 14 sich aber außerhalb des Behälters befindet. Um zu vermeiden, daß sich auf den die Meßstrecke begrenzenden Lichtleiterenden Staub ablagert, ist deren Oberfläche z. B. durch polieren oder Glattschmelzen besonders glatt ausgebildet.

Zusätzlich kann zur Vermeidung von Staubablagerungen in der Meßstrecke der Grenzwertgeber eine Spülleitung 22 enthalten, die an ihrem Ende mindestens eine auf die Meßstrecke 13 gerichtete Austrittsöffnung 23 besitzt, mit deren Hilfe die Meßstrecke periodisch mit Spülgasimpulsen beaufschlagt werden kann.

Das Verfahren zur Behandlung von fluidisiertem Ruß im Gegenstrom mit Gasen kann in der Weise durchgeführt werden, daß man aus dem Fließbett den behandelten Ruß in zeitlich konstantem Massenstrom austrägt und den Ausgangsruß in einer solchen Menge einspeist, daß das Niveau des Fließbetts konstant gehalten wird.

In der in Fig. 1 dargestellten Apparatur geschieht das in der Weise, daß die mit dem Austragsrohr 8 verbundene Schleuse 7 mit konstanter Drehzahl betrieben wird. Sinkt die Oberfläche des Fließbetts unter das durch den Grenzwertgeber 11 festgelegte Niveau, schaltet der Grenzwertgeber die Eintragsschleuse 9 so lange ein, bis die Meßstrecke des Grenzwertgebers wieder in das Fließbett eintaucht. Auf diese Weise wird durch die Eintragsschleuse 9 bei zeitlich konstantem Austrag der Schleuse 7 immer so viel Ruß eingespeist, daß das Fließbett das durch den Grenzwertgeber 11 festgelegte Niveau beibehält.

Nach einer zweiten Verfahrensvariante kann auch der Ausgangsruß über die Schleuse 9 in zeitlich konstantem Massenstrom in das Fließbett eingetragen werden. In diesem Fall wird der Rußaustrag mittels der Schleuse 7 durch den Grenzwertgeber 11 so gesteuert, daß die Schleuse 7 in Gang gesetzt wird, wenn der Grenzwertgeber 11 in das Fließbett eintaucht und angehalten bzw. verlangsamt wird, wenn das Niveau des Fließbetts unter die durch den Grenzwertgeber festgelegte Höhe absinkt.

Im Hinblick auf die Betriebssicherheit im Störfall und auf die Konstanz der Reaktionsführung wird die zuerst beschriebene Verfahrensvariante bevorzugt.

## Patentansprüche

1. Verfahren zur Behandlung von fluidisiertem Ruß mit Gasen bei vorzugsweise erhöhter Temperatur in einem Fließbett, wobei man den Ruß und die Behandlungsgase zur Einstellung eines gleichmäßigen Wirkungsprofils in der Behandlungsstrecke im Gegenstrom fuhrt. dadurch gekennzeichnet, daß man die Massenströme von Ruß und Behandlungsgasen konstant hält und den Massenstrom des Ausgangsrußes oder des behandelten Rußes mit Hilfe eines optisch-elektrischen Füllstandssignals so regelt, daß die Höhe des Fließbetts auf einem vorgegebenen Niveau gehalten wird.

2. Verfahren nach Anspruch 1, dadurch gekennzeichnet, daß man den behandelten Ruß in zeitlich konstantem Massenstrom austrägt und den Ausgangsruß in einer solchen Menge einspeist, daß das Niveau des Fließbetts konstant gehalten wird.

3. Verfahren nach Anspruch 1, dadurch gekennzeichnet, daß man den Ausgangsruß in zeitlich konstantem Massenstrom einträgt und den behandelten Ruß in einer solchen Menge austrägt, daß das Niveau des Fließbetts konstant gehalten wird.

4. Apparatur zur Durchführung eines Verfahrens zur Behandlung von fluidisiertem Ruß mit Gasen bei vorzugsweise erhöhter Temperatur in einem Fließbett, wobei man den Ruß und die Behandlungsgase zur Einstellung eines gleichmäßigen Wirkungsprofils in der Behandlungsstrecke im Gegenstrom fuhrt, bestehend aus einem senkrecht stehenden zylinderförmigen Behandlungsgefäß, einem an dessen unterem Ende angeordneten Fluidisierungsteil aus einem vom Zylinderquerschnitt aus nach unten verlaufenden kegelstumpfförmigen Mantel, einem in den Kegelstumpf eingesetzten, nach oben zulaufenden kegelförmigen Verdrängungskörper, mindestens einem an der tiefsten Stelle des Fluidisierungsteils im wesentlichen tangential mundenden Einleitungsrohr für das Behandlungsgas sowie einem über dem Behandlungsgefäß angeordneten Beruhigungsteil mit Auslaßrohr für das Abgas, gekennzeichnet durch ein axial in den Verdrängungskörper eingesetztes, in seinem verjüngten Ende mündendes, mit einer Schleuse verbundenes Rußaustragsrohr, eine am Kopf des Beruhigungsteils mündende und mit einer Schleuse verbundene Rußzufuhr sowie einen am Übergang zwischen Behandlungsgefäß und Beruhigungsteil angebrachten, das obere Niveau des Fließbetts über eine der beiden Schleusen steuernden optisch-elektrischen Grenzwertgeber.

5. Apparatur nach Anspruch 4, dadurch gekennzeichnet, daß der Grenzwertgeber einen haarnadelförmigen, von einer Meßstrecke unterbrochenen Lichtleiter aufweist, der an einem Schenkelende mit einer Lichtquelle und am anderen Schenkelende mit einem ein elektrisches Signal erzeugenden Lichtempfänger in Verbindung steht, wobei er relativ zum Fließbett so anbringbar ist, daß sein die Meßstrecke aufweisender Teil in das Fließbett ragt, seine rückwärtigen Schenkelabschnitte aber aus dem Fließbett zu Lichtquelle bzw. -empfänger herausführen.

6. Apparatur nach Anspruch 5, dadurch gekennzeichnet, daß der Grenzwertgeber durch eine zur Meßstrecke führende Leitung mit mindestens einer auf die Lichtleiterenden an der Meßstrecke gerichteten Austrittsöffnung für Spülgasimpulse versehen ist.

7. Apparatur nach Anspruch 5 oder 6, dadurch gekennzeichnet, daß die Lichtleiterenden des Grenzwertgebers an der Meßstrecke glatt ausgebildet sind.

8. Apparatur nach den Ansprüchen 5 bis 7, dadurch gekennzeichnet, daß der lichtzuführende Lichtleiterschenkel des Grenzwertgebers zur Lichtbündelung an der Meßstrecke verjüngt und/ oder seine Lichtaustrittsfläche konvex ausgebildet ist.

## Claims

1. A process for the treatment of fluidized carbon black with gases at preferably elevated temperature in a fluidized bed, the carbon black and the treatment gases being guided in countercurrent through the treatment zone to establish a uniform effect profile, characterized in that the mass flows of carbon black and treatment gases are kept constant and the mass flow of the starting carbon black or of the treated carbon black is regulated by means of an electro-optical filling level signal in such a way that the height of the fluidized bed is kept at a predetermined level.

2. A process as claimed in claim 1, characterized in that the treated carbon black is discharged in a constant mass flow and the starting carbon black is introduced in such a quantity that the level of the fluidized bed is kept constant.

3. A process as claimed in claim 1, characterized in that the starting carbon black is introduced in a constant mass flow and the treated carbon black is discharged in such a quantity that the level of the fluidized bed is kept constant.

4. An apparatus for carrying out a process for treating fluidized carbon black with gases at preferably elevated temperature in a fluidized bed, the carbon black and the treatment gases being guided in countercurrent through the treatment zone to establish a uniform effect profile, consisting of a vertically arranged, cylindrical treatment vessel, a fluidizing section — arranged at the lower end thereof — of a frustoconical casing extending downwards from the cylinder cross-section, an upwardly tapering conical displacement body inserted into the frustum, at least one inlet pipe for the treatment gas opening substantially tangentially at the lowest point of the fluidizing section and a settling section with an outlet pipe for the waste gas arranged over the treatment vessel, characterized by a carbon black discharge pipe inserted axially into, and opening at the tapered end of, the displacement body and connected to a gate, a carbon black feed pipe opening at the head of the stabilizing section and connected to a gate and an electro-optical limiting value signal generator arranged at the junction between the treatment vessel and the settling section and controlling the upper level of the fluidized bed through one of the two gates.

5. An apparatus as claimed in claim 4, characterized in that the limiting value signal generator comprises a hairpin-like photoconductor which is interrupted by a measuring zone and which, at one end, is connected to a light source and, at its other end, to a photoreceiver which generates an electrical signal, being designed for mounting relative to the fluidized bed in such a way that its part comprising the measuring zone projects into the fluidized bed while its rearward parts lead out from the fluidized bed to the light source and photoreceiver.

6. An apparatus as claimed in claim 5, characterized in that the limiting value signal generator is provided by a line leading to the measuring zone with at least one exit opening for purging gas impulses which is directed towards the ends of the photoconductor in the measuring zone.

7. An apparatus as claimed in claim 5 or 6, characterized in that the photoconductor ends of the limiting value signal generator in the measuring zone are smooth.

8. An apparatus as claimed in claims 5 to 7, characterized in that the light-carrying photoconductor arm of the limiting value signal generator is tapered and/or its light exit surface is convex to concentrate light in the measuring zone.

## Revendications

1. Procédé pour le traitement de noir de carbone fluidisé, par des gaz à température de préférence élevée, dans un lit fluidisé, dans lequel on fait passer le noir de carbone et les gaz de traitement à contre-courant dans le parcours de traitement pour l'établissement d'un profil d'action régulier, caractérisé en ce que l'on maintient constants les débits massiques du noir de carbone et des gaz de traitement et on règle le débit massique du noir de carbone initial ou du noir de carbone traité, à l'aide d'un détecteur opto-électrique de niveau, de manière à maintenir la hauteur du lit fluidisé à un niveau préétabli.

2. Procédé selon la revendication 1, caractérisé en ce que l'on évacue avec un débit massique constant dans le temps le noir de carbone traité et on introduit le noir de carbone initial en une quantité telle que le niveau du lit fluidisé est maintenu constant.

3. Procédé selon la revendication 1, caractérisé en ce que l'on introduit le noir de carbone initial avec un débit massique constant dans le temps et on évacue le noir de carbone traité en une quantité telle que le niveau du lit fluidisé et maintenu constant.

4. Appareil pour la mise en œuvre d'un procédé pour le traitement de noir de carbone fluidisé, par des gaz à température élevée, dans un lit fluidisé, dans lequel on fait passer le noir de carbone et les gaz de traitement à contre-courant dans le parcours de traitement pour l'établissement d'un profil d'action régulier, appareil constitué d'un récipient de traitement cylindrique placé verticalement, d'un élément de fluidisation, disposé à l'extrémité inférieure de celui-ci, constitué d'une enveloppe tronconique dirigée vers le bas à partir de la section transversale du cylindre, d'un éjecteur conique à pointe tournée vers le haut, inséré dans le tronc de cône, d'au moins un conduit d'arrivée pour le gaz de traitement, aboutissant pratiquement tangentiellement au point le plus bas de l'élément de fluidisation, ainsi que d'un élément de stabilisation disposé au-dessus du récipient de traitement, avec conduit de sortie pour le gaz rejeté, caractérisé par un conduit à écluses d'évacuation de noir de carbone relié à une vanne, inséré axialement dans l'éjecteur, aboutissant à l'extrémité rétrécie de celui-ci, un conduit d'arrivée de noir de carbone aboutissant au sommet de l'élément de stabilisation et relié à une vanne à écluses, ainsi que par un détecteur de valeur limite opto-électrique placé à la jonction entre récipient de traitement et élément de stabilisation, commandant le niveau supérieur du lit fluidisé par l'une des deux vannes à écluses.

5. Appareil selon la revendication 4, caractérisé en ce que le détecteur de valeur limite comporte un guide de lumière en U, interrompu par un intervalle de mesure, guide de lumière qui est en connexion avec une source lumineuse à l'extrémité d'une branche, et, à l'extrémité de l'autre branche, avec un photorécepteur engendrant un signal électrique, et pouvant être monté, par rapport au lit fluidisé, de manière que sa partie comportant l'intervalle de mesure pénètre dans le lit fluidisé, ses segments de branches postérieurs sortant toutefois du lit fluidisé pour aboutir, respectivement, à la source lumineuse et au photorécepteur.

6. Appareil selon la revendication 5, caractérisé en ce que le détecteur de valeur limite est muni d'un conduit aboutissant à l'intervalle de mesure, avec au moins un orifice de sortie pour impulsion de gaz de balayage, dirigé sur les extrémités du guide de lumière, au niveau de l'intervalle de mesure.

7. Appareil selon la revendication 5 ou 6, caractérisé en ce que les extrémités du guide de lumière du détecteur de valeur limite sont lisses au niveau de l'intervalle de mesure.

8. Appareil selon l'une quelconque des revendications 5 à 7, caractérisé en ce que, pour la focalisation de la lumière, la branche amenant la lumière du guide de lumière du détecteur de valeur limite est rétrécie et/ou sa face de sortie de la lumière est convexe.

*Fig.1*

1

Fig.2

EP 0 167 014 B1